# EUROPEAN PATENT APPLICATION

(11) **EP 4 050 078 A1**
(43) Date of publication of application: **31.08.2022**
(21) Application number: 20878151.8
(22) Date of filing: 25.08.2020
(51) Int. Cl.: C09J 123/30, C09J 133/04, C09J 201/02

(54) **BIOCOMPATIBLE ADHESIVE**

(30) Priority: 25.10.2019 JP 2019194425
(71) Applicant: Kyushu University, National University Corporation, Nishi-ku Fukuoka-shi Fukuoka 819-0395 (JP); Nissan Chemical Corporation, Tokyo 103-6119 (JP)
(72) Inventor: TOTANI Masayasu, Fukuoka-shi, Fukuoka 819-0395 (JP); TANAKA Keiji, Fukuoka-shi, Fukuoka 819-0395 (JP); MATSUNO Hisao, Fukuoka-shi, Fukuoka 819-0395 (JP); OZAWA Masaaki, Funabashi-shi, Chiba 274-0052 (JP); KATAYAMA Junko, Tokyo 103-6119 (JP)
(74) Representative: dompatent von Kreisler Selting Werner - Partnerschaft von Patent- und Rechtsanwälten mbB
(86) International application number: PCT/JP2020/032082
(87) International publication number: WO 2021/079610

(57) **Abstract**

The present invention is to provide an adhesive composition which comprises a copolymer A which contains a recurring unit having a cyclic ether structure and a recurring unit having a benzophenone structure, and a copolymer B which contains a recurring unit having a betaine structure and a recurring unit having a hydroxyl group, a cured product thereof, and a method for producing the cured product. The adhesive composition of the present invention is capable of curing in water, has high hydrophilicity, and is capable of forming a cured product having an excellent ability to inhibit adhesion of biological substances.

## Description

### TECHNICAL FIELD

The present invention relates to an adhesive composition containing a copolymer A which contains a recurring unit having a cyclic ether structure and a recurring unit having a benzophenone structure, and a copolymer B which contains a recurring unit having a betaine structure and a recurring unit having a hydroxyl group, a cured product thereof, and a method for producing the cured product.

### BACKGROUND ART

In recent years, various microdevices in which circuits or holes of a predetermined shape on the order of µm are formed on a substrate (chip) are developed by utilizing microfabrication technology such as MEMS (Microelectromechanical Systems) technology, and are used for a minute amount of experiments, or isolation, purification and analysis, etc., in biotechnology and chemical engineering.

In a device a biological sample, there is a problem that cells or proteins derived from the biological sample adhere to the surface of the device, whereby clogging or deterioration of analysis accuracy is caused. In order to solve such a problem, it has been reported to utilize a copolymer containing a specific anionic structure and a specific cationic structure as a coating agent which can be coated with a simple and convenient operation to the surface and can provide an excellent ability to inhibit adhesion of biological substances to the circuit of the device substrate material (for example, glass, a metal-containing compound or a semi-metal-containing compound, or a resin, etc.) (for example, see Patent Document 1).

Since a microdevice is usually manufactured by adhering a circuit in which PDMS or glass is processed to a substrate made of glass or a resin an adhesive, the formed adhesive (or a cured product thereof) layer can also come into contact with the biological sample similarly to the surface of the circuit or substrate. Accordingly, it is desirable that the adhesive (or a cured product thereof) used for a device using a biological sample also has high hydrophilicity and biocompatibility.

### PRIOR ART DOCUMENT

### PATENT DOCUMENT

Patent Document 1: WO 2017/065279

### SUMMARY OF THE INVENTION

### PROBLEMS TO BE SOLVED BY THE INVENTION

An object of the present invention is to provide an adhesive composition capable of curing in water, having high hydrophilicity, and capable of forming a cured product which has an excellent ability to inhibit adhesion of biological substances.

### MEANS TO SOLVE THE PROBLEMS

The present inventors have found that an adhesive composition containing two kinds of copolymers having specific structures, specifically, an adhesive composition containing a copolymer which contains a recurring unit having a cyclic ether structure and a recurring unit having a benzophenone structure, and a copolymer which contains a recurring unit having a betaine structure and a recurring unit having a hydroxyl group is capable of curing in water, has high hydrophilicity and capable of forming a cured product having an excellent ability to inhibit adhesion of biological substances, whereby they have accomplished the present invention.

The present invention is as follows.
[1] An adhesive composition which comprises a copolymer A which contains a recurring unit having a cyclic ether structure and a recurring unit having a benzophenone structure, and a copolymer B which contains a recurring unit having a betaine structure and a recurring unit having a hydroxyl group.
[2] The composition described in [1], wherein the adhesive composition is a two-component type comprising a first agent containing the copolymer A which contains a recurring unit having a cyclic ether structure and a recurring unit having a benzophenone structure, and a second agent containing the copolymer B which contains a recurring unit having a betaine structure and a recurring unit having a hydroxyl group.
[3] The composition described in [1] or [2], wherein the recurring unit having a cyclic ether structure of the copolymer A is a recurring unit represented by the following formula (a1): 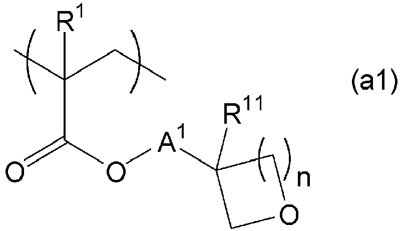
   (wherein R¹ represents a hydrogen atom or a C₁₋₅ alkyl group, A¹ represents a single bond or a C₁₋₅ alkylene group, R¹¹ represents a hydrogen atom, a C₁₋₅ alkyl group or an aryl group, and n represents 0, 1 or 2)
   and the recurring unit having a benzophenone structure is a recurring unit represented by the following formula (a2): 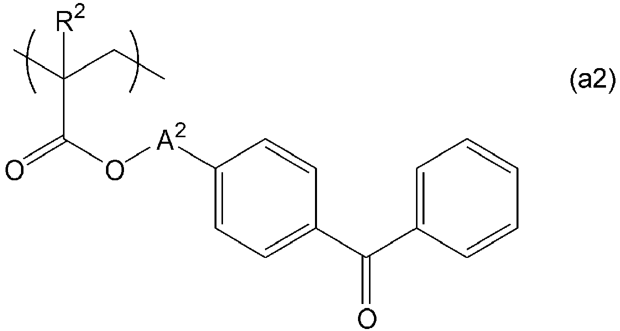
   (wherein R² represents a hydrogen atom or a C₁₋₅ alkyl group, and A² represents a single bond, a C₁₋₅ alkylene group, a C₁₋₅ alkyleneoxy group or -CH(OH)CO-).
[4] The composition described in [3], wherein a ratio (molar ratio) of the recurring unit having a cyclic ether structure to the recurring unit having a benzophenone structure in the copolymer A is 10/90 to 90/10.
[5] The composition described in [1] or [2], wherein the recurring unit having a betaine structure of the copolymer B is a recurring unit represented by the following formula (b1): 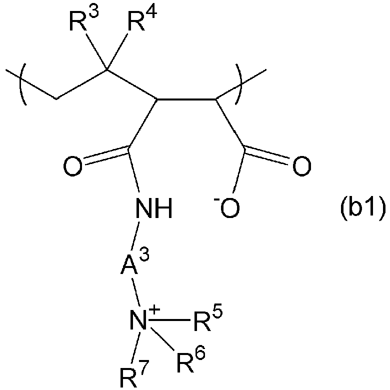
   (wherein R³ and R⁴ each independently represent a hydrogen atom, a C₁₋₅ alkyl group or a C₁₋₅ alkoxy group, R⁵, R⁶ and R⁷ each independently represent a hydrogen atom or a C₁₋₅ alkyl group and A³ represents a C₁₋₅ alkylene group),
   and the recurring unit having a hydroxyl group is a recurring unit represented by the following formula (b2): 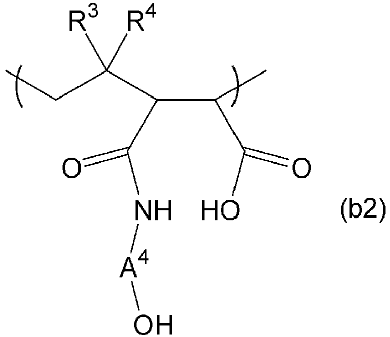
   (wherein R³ and R⁴ each independently represent a hydrogen atom, a C₁₋₅ alkyl group or a C₁₋₅ alkoxy group, and A⁴ represents a C₁₋₅ alkylene group).
[6] The composition described in [5], wherein a ratio (molar ratio) of the recurring unit having a betaine structure to the recurring unit having a hydroxyl group in the copolymer B is 10/90 to 90/10.
[7] The adhesive composition described in any one of [1] to [6], which further comprises an acid catalyst.
[8] A cured product of an adhesive composition which comprises a copolymer A which contains a recurring unit having a cyclic ether structure and a recurring unit having a benzophenone structure, and a copolymer B which contains a recurring unit having a betaine structure and a recurring unit having a hydroxyl group.
[9] The cured product described in [8], which has a function of inhibiting adhesion of biological substances.
[10] A method for producing the cured product of the adhesive composition described in any of [8] or [9], which comprises a step of mixing a copolymer A containing a recurring unit having a cyclic ether structure and a recurring unit having a benzophenone structure, with a copolymer B containing a recurring unit having a betaine structure and a recurring unit having a hydroxyl group; optionally, a step of adding an acid catalyst; a step of coating the obtained mixture to an object; and a step of subjecting to photoirradiation and heat treatment of a coated surface.
[11] The producing method described in [10], wherein the acid catalyst is an inorganic acid.

### EFFECTS OF THE INVENTION

The adhesive composition of the present invention contains a copolymer which contains a recurring unit having a cyclic ether structure and a recurring unit having a benzophenone structure, and a copolymer which contains a recurring unit having a betaine structure and a recurring unit having a hydroxyl group, so that the cured product shows excellent adhesiveness by the crosslinked structure formed between copolymers (for example, between the cyclic ether and the carboxyl group/hydroxyl group) by thermal curing or by the crosslinked structure formed between the copolymer and the substrate/circuit material by photocuring, and shows high hydrophilicity and an excellent ability to inhibit adhesion of biological substances by having a betaine structure. In addition, the adhesive composition of the present invention is capable of curing in water, and can be used as a two-component type adhesive, so that its handling is easy, whereby it is suitable as an adhesive used for a device, etc., which uses a biological sample.

### BRIEF DESCRIPTION OF THE DRAWINGS

Fig. 1 is ¹H-NMR spectrum of 4-benzoylphenyl methacrylate (hereinafter sometimes also referred to as "BPMA") obtained in Synthetic Example 2.
Fig. 2 is a graph showing a reaction behavior (polymerization rate of each monomer) during the polymerization reaction of poly[glycidyl methacrylate-ran-(4-benzoylphenyl methacrylate)] (hereinafter sometimes also referred to as "PGrB") obtained in Synthetic Example 3, and ○ is a polymerization rate of glycidyl methacrylate (hereinafter sometimes also referred to as "GMA") and △ is that of BPMA.
Fig. 3 is a ¹H-NMR spectrum of PGrB obtained in Synthetic Example 3.
Fig. 4(a) is a schematic drawing of a sample of Test Example 1 and a test method, and (b) is a stress-strain curve of a cured film of an adhesive composition (PBetaine/PGrB; without/with an acid catalyst) of Example 1 obtained in Test Example 1.
Fig. 5 is an atomic force microscope (AFM) image of a surface of a cured film of an adhesive composition (PBetaine/PGrB; with an acid catalyst) of Example 1 obtained in Test Example 2, and (a) is a height image and (b) is a phase image.
Fig. 6 shows results of a protein adsorption experiment to a cured film of an adhesive composition (PBetaine/PGrB; with an acid catalyst) of Example 1 obtained in Test Example 4, a PP substrate (Control Example 1) and a coating film of the composition (PGrB) of Comparative Example 1.
Fig. 7 is an optical microscope image showing results of a cell adhesion experiment of Test Example 5, and (a) shows a cell adhesion behavior on a surface of the cured film of the adhesive composition (PBetaine/PGrB; with an acid catalyst) of Example 1, (b) is that of a surface of the coating film of the composition (PGrB) of Comparative Example 1 and (c) is that of a surface of a polystyrene plate for cell culture.

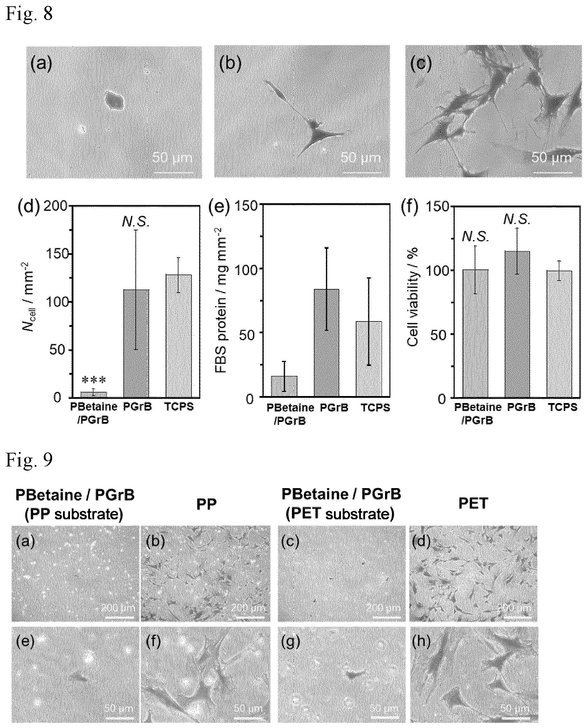

Figs. 8(a), (b) and (c) each shows an optical microscope image showing a cell adhesion behavior on a surface of the cured film of the adhesive composition (PBetaine/PGrB; with an acid catalyst) of Example 2, a surface of the coating film of the composition (PGrB) of Comparative Example 2 and a surface of a polystyrene plate (TCPS) for cell culture in Test Example 6, (d) is a graph showing the number of the adhered cells to each sample substrate surface; (e) is a graph showing results of adsorption experiment of a protein to a surface of the cured film of the adhesive composition (PBetaine/PGrB; with an acid catalyst) of Example 2, a surface of the coating film of the composition (PGrB) of Comparative Example 2 and a surface of a polystyrene plate (TCPS) for cell culture in Test Example 7; and (f) is a graph showing results of a cell toxicity experiment to a surface of the cured film of the adhesive composition (PBetaine/PGrB; with an acid catalyst) of Example 2, a surface of the coating film of the composition (PGrB) of Comparative Example 2 and a surface of a polystyrene plate (TCPS) for cell culture in Test Example 8.
Figs. 9(a) to (h) are optical microscope images showing a cell adhesion behavior on a surface of the cured film of the adhesive composition (PBetaine/PGrB; with an acid catalyst) of Example 2, and PP and PET substrate surfaces in Test Example 9.
Figs. 10(a), (b) and (c) are each an optical microscope image showing a platelet adhesion behavior on a surface of the cured film of the adhesive composition (PBetaine/PGrB; with an acid catalyst) of Example 3, a surface of the coating film of the composition (PGrB) of Comparative Example 3 and polyethylene terephthalate (PET) substrate surfaces in Test Example 10, (d) is a graph the number of the platelets adhered to each sample substrate surface; and (e) is a graph showing results of dividing the form of the platelets adhered to each sample substrate surface into three steps.
Figs. 11(a) to (h) are optical microscope images showing a platelet adhesion behavior on a surface of the cured film of the adhesive composition (PBetaine/PGrB; with an acid catalyst) of Example 3, and PP and PET substrate surfaces in Test Example 11.

### EMBODIMENTS TO CARRY OUT THE INVENTION

### [Adhesive composition]

The present invention relates to an adhesive composition which comprises a copolymer A containing a recurring unit having a cyclic ether structure and a recurring unit having a benzophenone structure, and a copolymer B containing a recurring unit having a betaine structure and a recurring unit having a hydroxyl group.

### <Copolymer A>

The adhesive composition of the present invention contains a copolymer A containing a recurring unit having a cyclic ether structure and a recurring unit having a benzophenone structure. In the copolymer A, the recurring unit having a cyclic ether structure means a recurring unit containing a 3 to 7-membered cyclic structure having at least one ether bond. It is preferably a recurring unit containing a 3 to 7-membered saturated cyclic structure having one ether bond, and examples of the 3 to 7-membered saturated cyclic structure having one ether bond may be mentioned oxirane, oxetane, oxolane (tetrahydrofuran), oxane (tetrahydropyran) and oxepane. It is more preferably a recurring unit containing a 3 to 5-membered saturated cyclic structure having one ether bond, and examples of the 3 to 5-membered saturated cyclic structure having one of these may be mentioned oxirane, oxetane and oxolane (tetrahydrofuran).

In a preferred embodiment of present invention, the recurring unit having a cyclic ether structure of the copolymer A is a recurring unit represented by the following formula (a1): 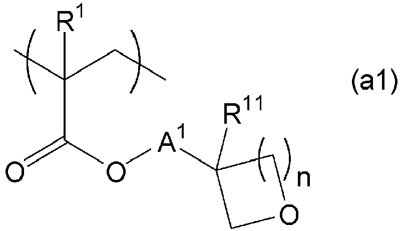 (wherein R¹ represents a hydrogen atom or a C₁₋₅ alkyl group, A¹ represents a single bond or a C₁₋₅ alkylene group, R¹¹ represents a hydrogen atom, a C₁₋₅ alkyl group or an aryl group, and n represents 0, 1 or 2).

Here, unless otherwise defined, in the present invention, the "C₁₋₅ alkyl group" means a monovalent group of a linear or branched saturated aliphatic hydrocarbon having a carbon number of 1 to 5. As the "C₁₋₅ alkyl group", there may be mentioned, for example, a methyl group, an ethyl group, an n-propyl group, an isopropyl group, an n-butyl group, an isobutyl group, an s-butyl group, a t-butyl group, an n-pentyl group, a 1-methylbutyl group, a 2-methylbutyl group, a 3-methylbutyl group, a 1,1-dimethylpropyl group, a 1,2-dimethylpropyl group, a 2,2-dimethylpropyl group or a 1-ethylpropyl group. As R¹, it is preferably a hydrogen atom, a methyl group or an ethyl group, and more preferably a hydrogen atom or a methyl group.

Similarly, unless otherwise defined, in the present invention, the "C₁₋₅ alkylene group" means a divalent group of a linear or branched saturated aliphatic hydrocarbon having a carbon number of 1 to 5. As the "C₁₋₅ alkylene group", there may be mentioned, for example, a methylene group, an ethylene group, a propylene group, a trimethylene group, a tetramethylene group, a 1-methylpropylene group, a 2-methylpropylene group, a dimethylethylene group, an ethylethylene group, a pentamethylene group, a 1-methyl-tetramethylene group, a 2-methyl-tetramethylene group, a 1,1-dimethyl-trimethylene group, a 1,2-dimethyl-trimethylene group, a 2,2-dimethyl-trimethylene group and a 1-ethyl-trimethylene group, etc. As A¹, it is preferably a single bond, methylene group, ethylene group or propylene group, more preferably a single bond, a methylene group or an ethylene group, and particularly preferably a methylene group.

Similarly, unless otherwise defined, in the present invention, the "aryl group" means a monovalent group of a monocyclic or polycyclic aromatic hydrocarbon having 6 to 10 carbon atoms and there may be mentioned, for example, a phenyl group, a naphthyl group or an anthryl group, etc. As R¹¹, it is preferably a hydrogen atom, a methyl group, an ethyl group or a phenyl group.

As the monomer capable of deriving the recurring unit represented by the formula (a1), there may be mentioned, for example, glycidyl (meth)acrylate, (3-ethyl-3-oxetanyl)methyl (meth)acrylate, (3-phenyl-3-oxetanyl)methyl (meth)acrylate, tetrahydrofurfuryl (meth)acrylate, etc. These can be obtained by preparing with the well-known method, or from a reagent supplier such as Sigma-Aldrich, etc., as a commercially available product. Incidentally, unless otherwise defined, in the present invention, the "(meth)acrylate" means an acrylate or a methacrylate.

In the copolymer A, the recurring unit having a benzophenone structure means a recurring unit containing one, substituted or unsubstituted benzophenone structure. It is preferably a recurring unit containing one unsubstituted benzophenone structure.

In a preferred embodiment of the present invention, the recurring unit having a benzophenone structure of the copolymer A is a recurring unit represented by the following formula (a2): 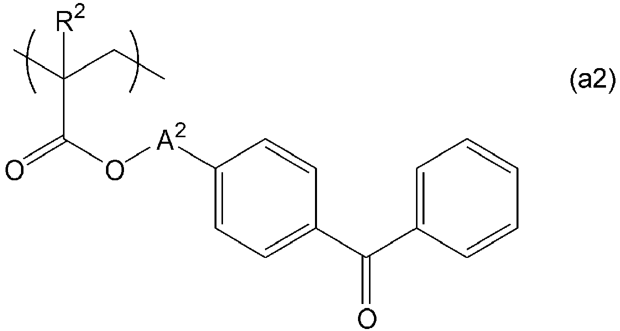 (wherein R² represents a hydrogen atom or a C₁₋₅ alkyl group, and A² represents a single bond, a C₁₋₅ alkylene group, a C₁₋₅ alkyleneoxy group or -CH(OH)CO-).

Here, unless otherwise defined, in the present invention, the "C₁₋₅ alkyleneoxy group" means a divalent group bonded to one end of the above-mentioned "C₁₋₅ alkylene group" through an oxygen atom, and examples of the C₁₋₅ alkylene portion and the preferred embodiment are also as mentioned above.

As R², it is preferably a hydrogen atom, a methyl group or an ethyl group, and is more preferably a hydrogen atom or a methyl group. As A², it is preferably a single bond, a methylene group, an ethylene group or a propylene group, or a methyleneoxy group, an ethyleneoxy group or a propyleneoxy group, more preferably a single bond, a methylene group, an ethylene group, or an ethyleneoxy group, and particularly preferably a single bond.

As the monomer capable of deriving the recurring unit represented by the formula (a2), there may be mentioned, for example, 4-benzoylphenyl (meth)acrylate, 2-(4-benzoylphenoxy)ethyl (meth)acrylate, etc. These can be obtained by preparing with the well-known method, or from a reagent supplier as a commercially available product.

In a preferred embodiment of the present invention, the copolymer A is a copolymer represented by the following formula (A1): 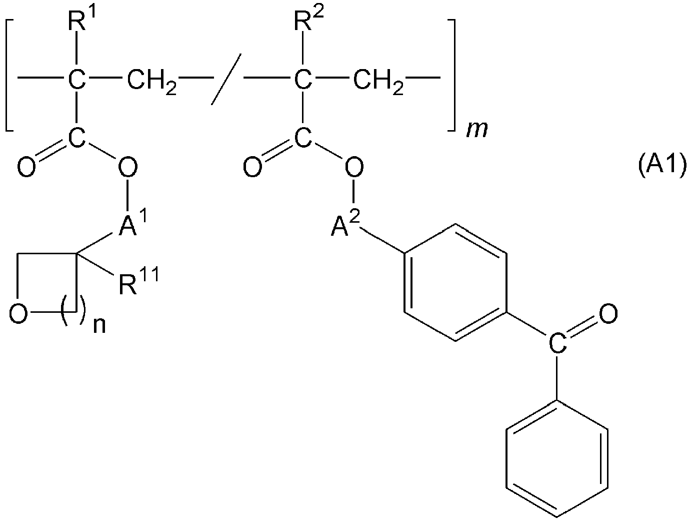 (wherein R¹, R², R¹¹, A¹, A² and n have the same meanings as defined above, and m represents a number of the recurring unit).
Here, m is an indefinite number.

The copolymer A may contain a recurring unit derived from an optional monomer, in addition to the recurring unit having a cyclic ether structure and the recurring unit having a benzophenone structure. The kind and the ratio of the optional monomer are not particularly limited as long as it does not impair the object of the present invention. A ratio of the sum of the monomer capable of deriving the recurring unit having a cyclic ether structure and the monomer capable of deriving the recurring unit having a benzophenone structure based on the whole monomer forming the copolymer A is at least 50 mol% or more, preferably 70 mol% or more, more preferably 90 mol% or more, further preferably 95 mol% or more, and particularly preferably 99 mol% or more. Also, a ratio (molar ratio) of the recurring unit having a cyclic ether structure to the recurring unit having a benzophenone structure is preferably 10/90 to 99/1, more preferably 20/80 to 95/5, and further preferably 30/70 to 90/10.

A ratio of the monomer capable of deriving the recurring unit having a cyclic ether structure (typically, the monomer capable of deriving the recurring unit represented by the formula (a1)) based on the whole monomer forming the copolymer A is 10 mol% to 99 mol%, preferably 20 mol% to 95 mol%, and more preferably 30 mol% to 90 mol%. Also, as the monomer forming the copolymer A, two or more kinds of monomers capable of deriving the recurring unit having a cyclic ether structure may be used.

A ratio of the monomer capable of deriving the recurring unit having a benzophenone structure (typically, the monomer capable of deriving the recurring unit represented by the formula (a2)) based on the whole monomer forming the copolymer A is 1 mol% to 90 mol%, preferably 5 mol% to 80 mol%, and more preferably 10 mol% to 70 mol%. Also, as the monomer forming the copolymer A, two or more kinds of monomers capable of deriving the recurring unit having a benzophenone structure may be used.

The copolymer A can be synthesized by the well-known polymerization method from a monomer capable of deriving a recurring unit having a cyclic ether structure and a monomer capable of deriving a recurring unit having a benzophenone structure. For example, the copolymer represented by the above-mentioned formula (A1) can be synthesized by applying the monomer capable of deriving the recurring unit represented by the formula (a1) and the monomer capable of deriving the recurring unit represented by the formula (a2) to radical polymerization, anion polymerization, cation polymerization, etc., which are the general synthetic method of an acrylic polymer or methacrylic polymer, etc. As the form, various methods are possible such as a solution polymerization, suspension polymerization, emulsion polymerization, bulk polymerization, etc. Among these, it is preferable to synthesize the material by the atom transfer radical polymerization method (ATRP).

The atom transfer radical polymerization method is a catalytic reaction using a metal complex, and in general, the metal complex is reacted with a polymerization initiator such as an organic halogenated compound to form a radical species to initiate polymerization with a monomer. Here, examples of the metal salt to form the metal complex may be mentioned copper(I), (II) chloride, copper(I), (II) bromide, iron(II), (III) chloride, iron(II) bromide, (III), cobalt(II) chloride, cobalt(II) bromide and titanium(IV) chloride, etc., and examples of the ligand to form the metal complex may be mentioned a nitrogen-containing ligand such as tris[2-(dimethylamino) ethyl]amine, tris(2-pyridylmethyl) amine (TPMA), 1,1,4,7,10,10-hexamethyltriethylenetetramine, N,N,N',N",N"-pentamethyldiethylenetriamine (PMDETA), etc. In addition, examples of the polymerization initiator may be mentioned organic halogenated compounds such as 2-bromoisobutyrate anhydrate, methyl 2-bromoisobutyrate, ethyl 2-bromoisobutyrate, propargyl 2-bromoisobutyrate, etc. By subjecting to the atom transfer radical polymerization using these in accordance with the usual method, a copolymer having a predetermined molecular weight and a narrow molecular weight distribution can be obtained. One of the specific examples of such a method is described in Example mentioned later.

A molecular weight of the copolymer A may be several thousands to several hundred-thousands, and preferably 1,000 to 100,000. It is further preferably 5,000 to 50,000, and most preferably 10,000 to 30,000. In addition, it may be either of a random copolymer or a block copolymer. The molecular weight distribution is represented by the ratio of the weight average molecular weight (Mw) and the number average molecular weight (Mn), and the molecular weight distribution (Mw/Mn) of the copolymer A is preferably less than 2, and more preferably less than 1.5.

### <Copolymer B>

The adhesive composition of the present invention contains a copolymer B which contains a recurring unit having a betaine structure and a recurring unit having a hydroxyl group. In general, betaine is a general term for intramolecular salt-type compounds having a quaternary ammonium cation and a carboxylic acid anion in one molecule. Accordingly, in the copolymer B, the recurring unit having a betaine structure means a recurring unit having a quaternary ammonium cation and a carboxylic acid anion.

In a preferred embodiment of the present invention, the recurring unit having a betaine structure of the copolymer B is a recurring unit represented by the following formula (b1): 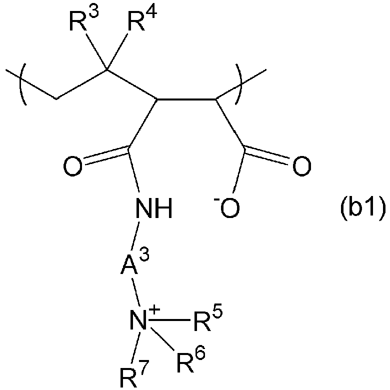 (wherein R³ and R⁴ each independently represent a hydrogen atom, a C₁₋₅ alkyl group or a C₁₋₅ alkoxy group, R⁵, R⁶ and R⁷ each independently represent a hydrogen atom or a C₁₋₅ alkyl group, and A³ represents a C₁₋₅ alkylene group).

Here, unless otherwise defined, in the present invention, the "C₁₋₅ alkoxy group" means a group in which the above-mentioned "C₁₋₅ alkyl group" is bonded to an oxy group, and there may be mentioned, for example, a methoxy group, an ethoxy group, an n-propoxy group, an isopropoxy group, an n-butoxy group, an isobutoxy group, an s-butoxy group, a t-butoxy group, an n-pentyloxy group, an isopentyloxy group, a neopentyloxy group, etc. As R³ and R⁴, these are each independently and preferably a hydrogen atom, a methyl group or a methoxy group, and more preferably a hydrogen atom or a methyl group.

As R⁵, R⁶ and R⁷, these are each independently and preferably a hydrogen atom, a methyl group or an ethyl group, and more preferably a hydrogen atom or a methyl group. As A³, it is preferably a methylene group, an ethylene group or a propylene group, and more preferably a methylene group or an ethylene group.

The recurring unit represented by the formula (b1) can be obtained by subjecting to ring-opening of the maleic anhydride portion of an alternating copolymer obtained from maleic anhydride and an olefin compound such as ethylene, isobutylene or methyl vinyl ether, etc., by a diamine compound. Such an alternating copolymer may be mentioned, for example, poly(ethylene-alt-maleic anhydride), poly(isobutylene-alt-maleic anhydride) and poly(methyl vinyl ether-alt-maleic anhydride), etc. Also, as the diamine compound, there may be mentioned, for example, N,N-dimethylethylenediamine, N,N-dimethyl-1,3-propanediamine, N,N-dimethyl-1,4-butanediamine, etc. These alternating copolymers and diamine compounds can be obtained by preparing with a well-known method, or from a reagent supplier as a commercially available product.

In the copolymer B, a recurring unit having a hydroxyl group means a recurring unit containing at least one hydroxyl group. It is preferably a recurring unit containing at least one hydroxyl group bonded to a primary carbon.

In a preferred embodiment of the present invention, the recurring unit having a hydroxyl group of the copolymer B is a recurring unit represented by the following formula (b2): 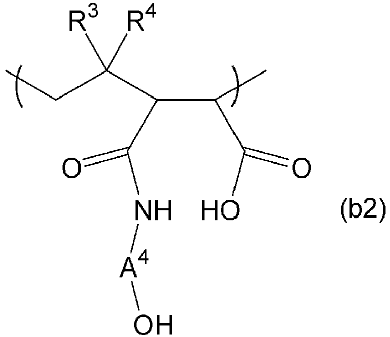 (wherein R³ and R⁴ each independently represent a hydrogen atom, a C₁₋₅ alkyl group or a C₁₋₅ alkoxy group, and A⁴ represents a C₁₋₅ alkylene group).

As R³ and R⁴, these are each independently and preferably a hydrogen atom, a methyl group or a methoxy group, and more preferably a hydrogen atom or a methyl group. As A⁴, it is preferably a methylene group, an ethylene group or a propylene group, and more preferably a methylene group or an ethylene group.

The recurring unit represented by the formula (b2) can be obtained by subjecting to ring-opening of the maleic anhydride portion of an alternating copolymer obtained from maleic anhydride and an olefin compound such as ethylene, isobutylene or methyl vinyl ether, etc., by an alkanolamine compound. As such an alternating copolymer, similarly to the recurring unit represented by the above-mentioned formula (b1), there may be mentioned, for example, poly(ethylene-alt-maleic anhydride), poly(isobutylene-alt-maleic anhydride) and poly(methyl vinyl ether-alt-maleic anhydride), etc. Also, as the alkanolamine compound, there may be mentioned, for example, methanolamine, ethanolamine, 3-amino-1-propanol, 4-amino-1-butanol, etc. These alternating copolymers and alkanolamine compounds can be prepared by the well-known method, or from a reagent supplier as a commercially available product.

In a preferred embodiment of the present invention, the copolymer B is a copolymer represented by the following formula (B1): 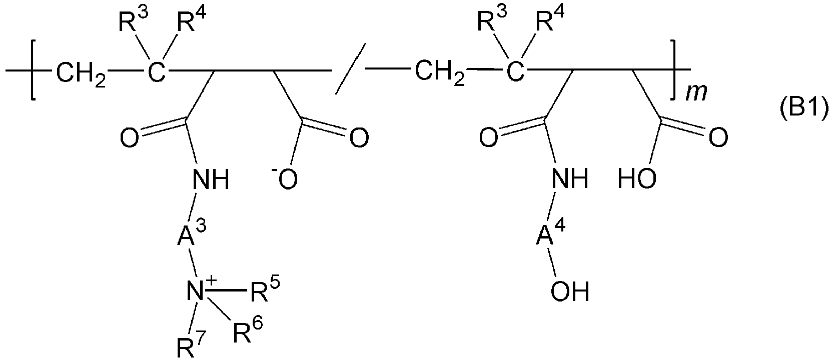 (wherein R³, R⁴, R⁵, R⁶, R⁷, A³ and A⁴ have the same meanings as defined above, and m represents a number of the recurring unit). Here, m is an indefinite number.

The copolymer B may contain a recurring unit derived from an optional monomer(s) in addition to the recurring unit having a betaine structure and the recurring unit having a hydroxyl group. A kind of the optional monomer and a ratio thereof are not particularly limited as long as it does not impair the object of the present invention. For example, in the copolymer B1, a total ratio of the maleic anhydride and the olefin compound based on the whole monomers forming the main chain is at least 50 mol%, preferably 70 mol% or more, more preferably 90 mol% or more, further preferably 95 mol% or more, and particularly preferably 99 mol% or more. In addition, a ratio (molar ratio) of the recurring unit having a betaine structure to the recurring unit having a hydroxyl group is preferably 10/90 to 90/10, more preferably 20/80 to 80/20, and further preferably 30/70 to 70/30.

The copolymer B containing the recurring unit having a betaine structure and the recurring unit having a hydroxyl group can be synthesized by the well-known polymerization method. For example, the copolymer represented by the above-mentioned formula (B1) can be obtained by subjecting to ring-opening the maleic anhydride portion of the alternating copolymer obtained by maleic anhydride and an olefin compound such as ethylene, isobutylene or methyl vinyl ether, etc., by a diamine compound and an alkanolamine compound. One of the specific examples of such a method is described in Example mentioned later.

A molecular weight of the copolymer B may be several thousands to several millions or so, and preferably 1,000 to 1,000,000. It is further preferably 2,000 to 500,000, and most preferably 5,000 to 100,000.

### <Adhesive composition>

The adhesive composition of the present invention may be used as a one-component curable type composition containing a copolymer A which contains a recurring unit having a cyclic ether structure and a recurring unit having a benzophenone structure, and a copolymer B which contains a recurring unit having a betaine structure and a recurring unit having a hydroxyl group, but it may be used as a two-component curable type composition in which these components are divided into two. When the adhesive composition of the present invention is used as a two-component curable type composition, it is suitable that it is made the first agent containing the copolymer A and the second agent containing the copolymer B from the viewpoint of storage stability. At that time, each agent may be used by mixing immediately before its use, but without directly mixing, for example, one of the agents is coated on an adhesive surface of the object as a primer in advance, subsequently the other agent is coated on the same surface and it may be applied to photocuring and heat curing.

The first agent containing the copolymer A may be any material in which the copolymer A is dissolved or dispersed in an optional solvent. As the solvent to be used, it is not particularly limited as long as it is inactive to each component and suitable for dissolution or dispersion of the copolymer A. Examples of such a solvent may be mentioned an alcohol having 1 to 6 carbon atoms, a ketone such as acetone, methyl ethyl ketone, etc., a sulfoxide such as dimethylsulfoxide, etc., or an amide such as N,N-dimethylformamide, etc. A concentration of the copolymer A in the first agent is not particularly limited, and examples thereof may be 0.1 to 50% by mass, preferably 0.5 to 20% by mass, and more preferably 1 to 20% by mass.

Similarly, the second agent containing the copolymer B may be any material in which the copolymer B is dissolved or dispersed in an optional solvent. As the solvent to be used, it is not particularly limited as long as it is inactive to each component and suitable for dissolution or dispersion of the copolymer B. Examples of such a solvent may be mentioned an alcohol having 1 to 6 carbon atoms, a ketone such as acetone, methyl ethyl ketone, etc., a sulfoxide such as dimethylsulfoxide, etc., or an amide such as N,N-dimethylformamide, etc. A concentration of the copolymer B in the second agent is not particularly limited, and examples thereof may be 0.1 to 50% by mass, preferably 0.5 to 20% by mass, and more preferably 1 to 20% by mass.

Also, the adhesive composition of the present invention may contain an acid catalyst. The acid catalyst is an organic acid or an inorganic acid, examples of the organic acid may be mentioned formic acid, acetic acid, citric acid, oxalic acid, etc., and examples of the inorganic acid may be mentioned hydrochloric acid, sulfuric acid, nitric acid, etc. The acid catalyst is preferably an inorganic acid, and more preferably hydrochloric acid or sulfuric acid. The kind, concentration and/or amount of the acid catalyst may be appropriately selected depending on the components contained in the adhesive composition and the object to which the adhesive composition is applied. An amount of the acid catalyst is, based on 1 part by mass of the solid component in the mixture, 0.001 to 10 parts by mass of the acid catalyst, and preferably 0.01 to 1 part by mass. Also, when the adhesive composition of the present invention is used as a two-component curable type composition, either of the first agent containing the copolymer A or the second agent containing the copolymer B may contain the acid catalyst, and it is preferable that the first agent contains the acid catalyst.

The adhesive composition of the present invention may contain a known additive depending on the purpose within the range which does not impair the effects of the present invention, for example, an inorganic filler, a reinforcing material, a colorant, a stabilizer, a bulking agent, a viscosity modifier, a tackifier, a flame retardant, an UV absorber, an antioxidant, a discoloration inhibitor, an antibacterial agent, a fungicide, an anti-aging agent, an antistatic agent, a plasticizer, a lubricant, a smoothening agent, a foaming agent, a mold releasing agent, etc.

### [Cured product]

The cured product of the present invention is a cured product of the above-mentioned adhesive composition. The cured product of the present invention can be typically obtained by the production method which comprises (i) a step of mixing a copolymer A which contains a recurring unit having a cyclic ether structure epoxy group and a recurring unit having a benzophenone structure, with a copolymer B which contains a recurring unit having a betaine structure and a recurring unit having a hydroxyl group; (ii) if necessary, a step of adding an acid catalyst; (iii) a step of coating the obtained mixture to an object; and (iv) a step of subjecting to photoirradiation and heat treatment of the coated surface.

The step (i) is a step of mixing the copolymer A and the copolymer B. Mixing is preferably carried out in a solvent. The solvent to be used is not particularly limited as long as it is inactive to the respective components and is suitable for dissolving or dispersing the respective copolymers. Examples of such a solvent may be mentioned an alcohol having 1 to 6 carbon atoms, a ketone such as acetone, methyl ethyl ketone, etc., a sulfoxide such as dimethylsulfoxide, etc., or an amide such as N,N-dimethylformamide, etc. Here, the copolymers A and B may be each the first agent containing the copolymer A and the second agent containing the copolymer B. A solid component concentration in the mixture obtained in the step (i) is typically 0.1 to 50% by mass, preferably 1 to 20% by mass, and more preferably 2 to 10% by mass.

The step (ii) is a step of adding an acid catalyst to the mixture of the copolymer A and the copolymer B obtained in the step (i). The step (ii) may not be carried out, but is preferably carried out. For example, when either of the first agent containing the copolymer A or the second agent containing the copolymer B used in the step (i) contains the acid catalyst, the step (ii) may not necessarily be carried out. The acid catalyst is an organic acid or an inorganic acid, examples of the organic acid may be mentioned formic acid, acetic acid, citric acid, oxalic acid, etc., and examples of the inorganic acid may be mentioned hydrochloric acid, sulfuric acid, nitric acid, etc. The acid catalyst is preferably the inorganic acid, and more preferably hydrochloric acid or sulfuric acid. The kind, concentration and/or amount of the acid catalyst may be appropriately selected depending on the components contained in the adhesive composition and the object to which the adhesive composition is applied. For example, when the acid catalyst is hydrochloric acid, an aqueous hydrochloric acid solution is used with an amount of 0.1 to 37% by mass, and preferably 1 to 20% by mass, and in a catalytic amount, for example, the acid catalyst is added in an amount of 0.001 to 10 parts by mass, and preferably 0.01 to 1 part by mass based on 1 part by mass of the solid component in the mixture.

Incidentally, in place of the step (ii), the acid catalyst may be added in advance to the first agent containing the copolymer A or the second agent containing the copolymer B used in the step (i), and preferably to the first agent containing the copolymer A.

The step (iii) is a step of coating the obtained mixture to an object. The adhesive composition of the present invention can be applied to a resin, wood, woven fabric, nonwoven fabric, cloth, paper, silicon wafer, ceramic, etc., and a composite material thereof, etc., as a matter of course, and also applied to glass and metal (for example, aluminum foil, copper foil, SUS plate, etc.). Among these, the object is preferably a resin. As the resin, it may be either of a natural resin or a derivative thereof, or a synthetic resin, and the natural resin or a derivative thereof may be mentioned cellulose, cellulose triacetate (CTA), nitrocellulose (NC), cellulose to which dextran sulfate has been fixed, etc., and as the synthetic resin, there may be mentioned polyacrylonitrile (PAN), polyester-based polymer alloy (PEPA), polystyrene (PS), polysulfone (PSF), polyethylene terephthalate (PET), polymethyl methacrylate (PMMA), polyvinyl alcohol (PVA), polyurethane (PU), ethylene vinyl alcohol (EVAL), polyethylene (PE), polyester, polypropylene (PP), polyvinylidene fluoride (PVDF), polyether sulfone (PES), polycarbonate (PC), polyvinyl chloride (PVC), polytetrafluoroethylene (PTFE), ultra-high molecular weight polyethylene (UHPE), polydimethylsiloxane (PDMS), acrylonitrile-butadiene-styrene resin (ABS) or Teflon (registered trademark), and for curing of the adhesive composition of the present invention, photoirradiation is used so that a transparent resin such as polyethylene terephthalate (PET), polymethyl methacrylate (PMMA), polycarbonate (PC), polyvinyl chloride (PVC), polydimethylsiloxane (PDMS), etc., is preferable.

The step (iv) is a step of photo-irradiating the coated surface and subjecting to heat treatment to cure the adhesive composition. Photoirradiation is typically carried out by irradiating ultraviolet light in a high humidity environment (for example, humidity of 50 to 90% RH) or under an ambient environment. As a light source of the ultraviolet, there may be used, for example, UV-LED, low, medium or high pressure mercury lamp, mercury xenon lamp, metal halide lamp, tungsten lamp, arc light, excimer lamp, excimer laser, semiconductor laser, YAG laser, and various ultraviolet irradiation devices, etc. An ultraviolet irradiation amount (integrated light amount) is, for example, about 10 to 5,000 mJ/cm².

The heat treatment is typically carried out after photoirradiation at a temperature of about 30 to 300°C for about 1 minute to 24 hours under atmospheric pressure or under reduced pressure conditions, but the heat treatment may be carried out before photoirradiation or under photoirradiation.

The cured product of the adhesive composition of the present invention thus obtained shows excellent adhesiveness by the crosslinked structure formed between copolymers (for example, between the cyclic ether and the carboxyl group/hydroxyl group) by thermal curing or by the crosslinked structure formed between the copolymer and the substrate/circuit material by photocuring, and shows high hydrophilicity and an excellent ability to inhibit adhesion of biological substances by having a betaine structure. Incidentally, in the present invention, the "ability to inhibit adhesion of biological substances" means that, in an adhesion test carrying out by the method described in Examples (for example, Test Example 5) later, a relative adhesion amount (%) ((result of colorimetric determination of culture solution in coated container)/(result of colorimetric determination of culture solution in non-coated container) × 100) which is comparison of the result of colorimetric determination of a culture solution in a cell culture container in which the cured film of the adhesive composition of the present invention has been formed and the result colorimetric determination of a culture solution in a cell culture container in which no cured film of the adhesive composition of the present invention has been formed is 50% or less, preferably 30% or less, and further preferably 20% or less.

### EXAMPLES

Hereinafter, the present invention will be explained in more detail based on Synthetic Examples, Examples, Test Examples, etc., but the present invention is not limited by these.

Incidentally, in Examples, preparation of the sample and device used for analysis of physical properties and conditions thereof are as follows.

### (1) Size exclusion chromatography (SEC)

- Device 1: High performance liquid chromatograph (HLC-8120GPC) manufactured by TOSOH CORPORATION
   SEC column: TSKgel guard column Super AW-H (4.6 mmID × 3.5 cm) × 1, TSKgel Super AW5000 (6.0 mmID × 15 cm) × 1 and Super AW2500 (6.0 mmID × 15 cm) × 1 are connected.
   Flow rate: 0.5 mL/min
   Eluent: N,N-dimethylformamide (DMF) (containing 10% by mass lithium bromide) Column temperature: 40°C
   Detection: Differential refractive index detector (RI)
   Injection concentration: Polymer solid content of 0.5% by mass
   Injection amount: 100 µL
   Calibration curve: Cubic approximate curve
   Standard sample: Polymethyl methacrylate (available from Sigma Aldrich Co. LLC) × 6 kinds
- Device 2: SEC (EXTREMA: CO-4060, RI-4030, UV-4070, PU-4180) manufactured by JASCO Corporation
   SEC column: TSKgel column MP (XL) (6.0 mmID × 4 cm) × 1 and TSKgel MultiporeH (XL)-M (7.8 mmID × 30 cm) × 3 are connected.
   Flow rate: 1.0 mL/min
   Eluent: Tetrahydrofuran (THF)
   Column temperature: 40°C
   Detection: RI
   Injection concentration: Polymer solid content of 0.5% by mass
   Injection amount: 100 µL
   Calibration curve: Cubic approximate curve
   Standard sample: Polystyrene (available from Polymer Source, Inc.) × 6 kinds

### (2) ¹H NMR spectrum

- Device: JNM-ECP400 manufactured by JEOL Ltd.
   Solvent: Deuterated chloroform (CDCl₃), deuterated dimethylsulfoxide ((CD₃)₂C(=O))
   Standard: CHCl₃ (7.26 ppm)
   Tetramethylsilane (0.00 ppm)
   (CH₃)₂C(=O) (2.10 ppm)

### (3) Spin coater

- Device: 1H-D7 manufactured by MIKASA CO., LTD.

### (4) X-ray photoelectron spectroscopy (XPS)

- Device: PHI5000 VersaProbe III manufactured by ULVAC PHI Inc. Measurement conditions: 14.0 kV, 14 mA

### (5) Contact angle

- Device: DropMaster 500 manufactured by Kyowa Interface Science Co., Ltd.

### (6) Optical microscope

- Device: All-in-one fluorescence microscope (Biozero BZ-8100) manufactured by Keyence Co., Ltd.

### (7) Atomic force microscope (AFM)

- Device: (Asylum Research Cypher ES) manufactured by Oxford Instruments Co., Ltd.

### (8) Tensile testing machine

- Device: Tensilon RTC-1250 manufactured by ORIENTEC Co., Ltd.

### [Measurement of substituent composition ratio by NMR (Nuclear Magnetic Resonance method)]

The substituent introducing ratio shown in the following Synthetic Examples is a measurement result by NMR Synthetic Examples 1 to 3 were all measured using JNM-ECP400 (manufactured by JEOL Ltd.).

### [Molecular weight and molecular weight distribution]

The weight average molecular weight and molecular weight dispersity shown in the following Synthetic Examples are measurement results by SEC. Synthetic Example 1 was measured by using the device 1, and Synthetic Example 3 was measured by using the device 2.

### [Synthetic Example 1]

A copolymer (referred to as PBetaine) shown as the copolymer B in the following was synthesized. In 20 mL of DMF (available from FUJIFILM Wako Pure Chemical Corporation) was sufficiently dissolved 2 g of isobutylene-maleic anhydride copolymer (PIBMA) (product name: poly(isobutylene-alt-maleic anhydride), available from Aldrich Co., LLC), and further, 0.88 g of N,N-dimethylethylenediamine (amine 1) (available from Tokyo Chemical Industry Co., Ltd.) and 0.6 g of ethanolamine (amine 2) (available from Tokyo Chemical Industry Co., Ltd.) were added thereto. While maintaining the temperature of the mixed solution to 45°C (318K), the mixed solution was stirred for 12 hours. The reaction solution was added dropwise to an excess amount of acetone (available from Kanto Chemical Co., Inc.) while stirring to precipitate a product. The obtained precipitate was subjected to drying under reduced pressure for 12 hours to obtain a white powder of an objective compound PBetaine.

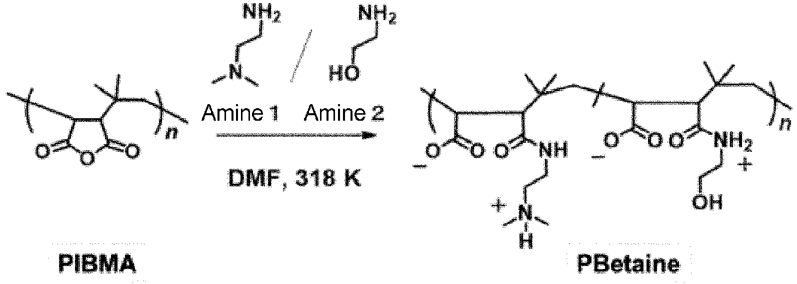

### [Synthetic Example 2]

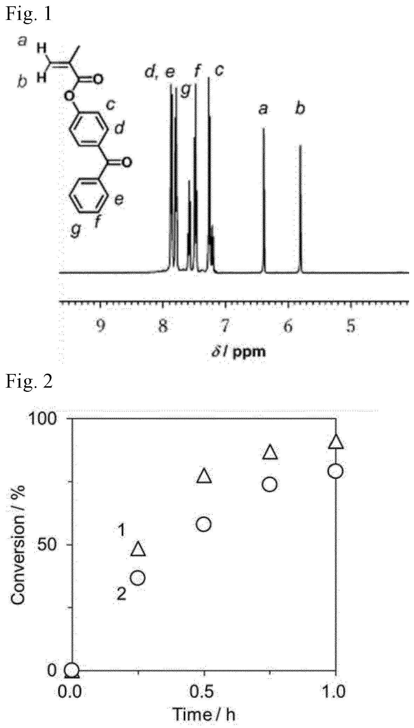

As a monomer of the copolymer A, 4-benzoylphenyl methacrylate (BPMA) was synthesized. In a 500 mL eggplant-shaped flask, 20 g of 4-hydroxybenzophenone (4-HBP) (available from Sigma Aldrich Co. LLC) and 12.1 mL of triethylamine (available from Tokyo Chemical Industry Co., Ltd.) were added to 300 mL of diethyl ether (available from FUJIFILM Wako Pure Chemical Corporation). The mixed solution was cooled with an ice-bath while stirring using a stirrer, and a mixed solution comprising 12.5 mL of methacryloyl chloride (MC) (available from Tokyo Chemical Industry Co., Ltd.) and 20 mL of diethyl ether was gently added dropwise thereto using a dropping funnel. After stirring under ice-bath for 1 hour, the mixture was stirred under room temperature circumstance for 12 hours to react these. To remove triethylamine hydrochloric acid salt which is a by-product, filtration of the reaction solution was carried out, and the obtained ether reaction solution was concentrated by a rotary evaporator. To the concentrated solution was added 0.1% by mass sodium hydroxide aqueous solution, and washed it using a separating funnel. After subjecting to washing using a large excess distilled water, magnesium sulfate was added to the obtained ether reaction solution to carry out dehydration operation, then, filtration and drying under reduced pressure were carried out to obtain a pale yellowish solid of an objective compound BPMA. As shown in Fig. 1, the chemical structure of BPMA was confirmed by ¹H NMR spectrum.

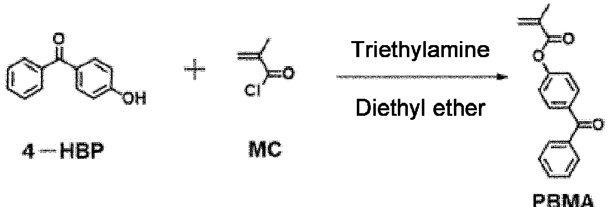

### [Synthetic Example 3]

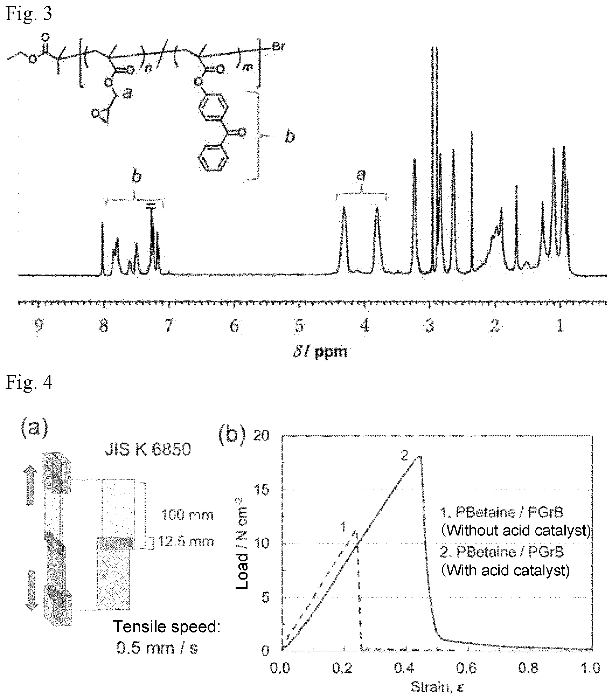

A copolymer (referred to as PGrB) shown below as the copolymer A was synthesized in accordance with Reference document 1 (P.S. Vijayanand, C. S. Unnithan, A. Penlidis, S. Nanjundan. J. Polym. Sci. A Polym. Chem., 2005, 42, 55-569). In 4.34 mL of N,N-dimethylformamide (DMF) (available from FUJIFILM Wako Pure Chemical Corporation) were dissolved 3.48 g of glycidyl methacrylate (GMA) (available from FUJIFILM Wako Pure Chemical Corporation) and 0.98 g of 4-benzoylphenyl methacrylate (BPMA: Synthetic Example 2). Further, 29.8 mg of copper(I) chloride (available from Kishida Chemical Co., Ltd.), 0.6 mL of a DMF solution containing N,N,N',N",N"-pentamethyldiethylenetriamine (PMDETA) (available from Sigma Aldrich Co. LLC) and 0.6 mL of a DMF solution containing 2-ethyl-2-bromoisobutyrate (EBiB) (available from Tokyo Chemical Industry Co., Ltd.) were added thereto. Dissolved oxygen was removed by bubbling an argon gas (available from Nippon Air Liquide Co., Ltd.) for 2 minutes. Thereafter, it was immersed in an oil bath at 50°C to initiate the reaction of the polymerization. After 1 hour from initiation of the reaction, the reaction solution was cooled with ice water to stop the polymerization reaction. In Fig. 2, a polymerization behavior of PGrB during the reaction is shown. It was found that the polymerization rates of GMA and BPMA obtained from ¹H NMR spectrum both showed a similar increasing tendency. In Fig. 3, ¹H NMR spectrum of PGrB after purification is shown. From the results of Fig. 3, each peak of GMA and BPMA could be confirmed, which suggests that both components are contained in one molecule. Also, a composition ratio of GMA and BPMA was a ratio of 88/12, which was almost the same as the charging ratio. From the SEC measurement, the weight average molecular weight was 19,000, and the molecular weight dispersity was 1.34. From the above results, it was clarified that a random copolymer of PGrB was obtained.

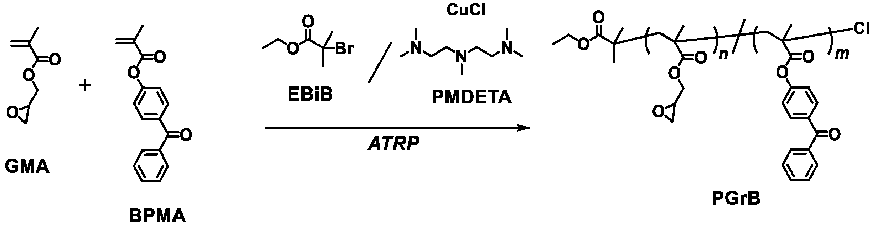

### <Example 1>

A 3% by mass dimethylsulfoxide solution of PBetaine obtained in Synthetic Example 1 and a 3% by mass dimethylsulfoxide solution of PGrB obtained in Synthetic Example 3 were mixed with a ratio of 1 : 3 V/V% to make it as an adhesive composition (without acid catalyst). Further, several drops of a 6 mol/L hydrochloric acid aqueous solution were added dropwise and mixed to prepare an adhesive composition (with an acid catalyst).

### <Comparative Example 1>

A 3% by mass dimethylsulfoxide solution of PGrB obtained in Synthetic Example 3 was prepared and used as the composition of Comparative Example 1.

The substrates used in the following Test Examples 1 to 5 are as follows. (Glass substrate)

Commercially available slide glass for microscopic for microscopic observation (manufactured by Matsunami Glass Ind., Ltd.) was cut into 1 cm × 1 cm and used.

### (Silicon substrate)

A silicon wafer (manufactured by SUMCO Corporation) was cut into 1.5 cm × 1.5 cm and used.

### (Various kinds of plastic substrates)

Plastic substrates used in the experiment are as follows. Polypropylene (PP) (manufactured by Acrysunday Co., Ltd.), polydimethylsiloxane (PDMS) (SYLGARD 184, manufactured by Toray Dow Corning Co., Ltd.)

### <Test Example 1>

### [Tensile test]

The tensile test was practiced using JIS K 6849 as a standard. The adhesive composition of Example 1 was drop-coated on a PP and PDMS substrate in a range of 12.5 mm in length and 25 mm in width, respectively, and UV-irradiation for 5 minutes was carried out. Further, the coated surfaces of the PP substrate and the PDMS substrate were laminated, and UV-irradiation for 5 minutes was again carried out. Then, under reduced pressure conditions at 60°C, drying by heating was carried out to make a sample. The sample in which the bonded parts were cured was set in a tensile tester (manufactured by Orientec Co., Ltd.) as shown in Fig. 4 (a), and elongated using the tensile tester at a tensile speed of 5 mm/min under a room temperature environment. On the stress-strain curve (SS curve), the above-mentioned sample was elongated until it broke, and the breaking stress (N/mm²) was measured. In Fig. 4(b), the SS curve of the sample is shown. In the sample using the adhesive composition (without acid catalyst) to which no acid catalyst was added at the time of curing, the sample broke at 11.2 N/mm². On the other hand, in the sample using the adhesive composition (with an acid catalyst) to which the acid catalyst was added at the time of curing, the breaking strength thereof was increased to 18 N/mm². It has been known that the acid catalyst promotes the cross-linking reaction between the epoxy group and the hydroxyl group, and it was confirmed in the experimental results that the breaking strength was improved by the acid catalyst.

### <Test Example 2>

### [Observation of coated surface with atomic force microscope]

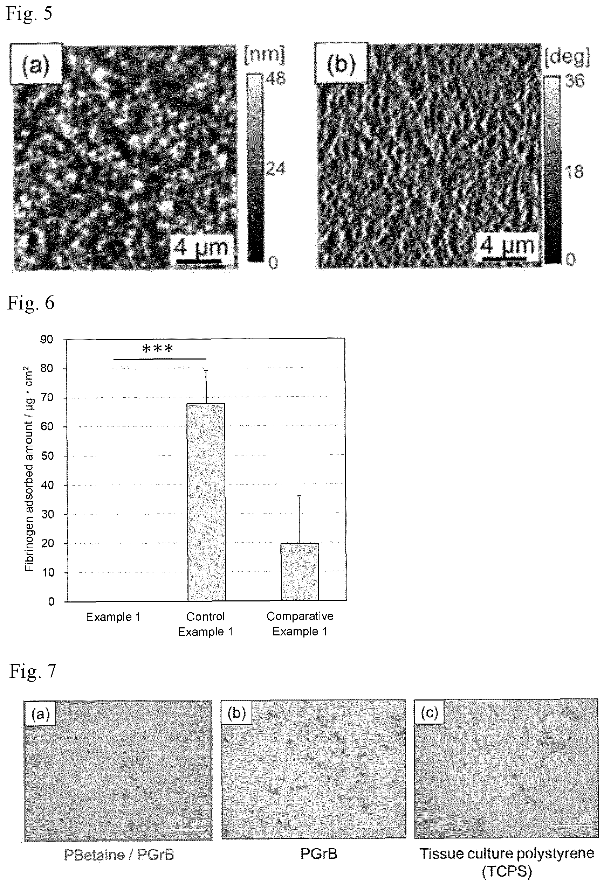

The adhesive composition (with an acid catalyst) obtained in Example 1 was spin-coated on a glass substrate, and similarly to Test Example 1, UV irradiation and drying by heating under reduced pressure were carried out to make a sample. Surface observation of the surface of the cured film was carried out using an atomic force microscope (AFM) (manufactured by Oxford Instruments Co., Ltd.), and the structure of the prepared sample surface was observed in an atmosphere. A cantilever (manufactured by Nanoworld AG) having a length of 160 µm, a resonance frequency of 285 kHz, and a spring constant of 42 N/m was used. The observation conditions were made a scan range of 10 µm × 10 µm and a scan speed of 0.5 Hz, measurements in contact mode, and saved as a digital image in a tiff file. This was applied to image analysis with the data processing software built into the device. Fig. 5(a) shows a height image obtained from AFM, and (b) shows a phase image. It was found that the height image or the film surface had unevenness, and the surface mean square roughness was about 12 nm.

### <Test Example 3>

### [Evaluation of static contact angle]

The adhesive composition (with an acid catalyst) obtained in Example 1 was spin-coated on a silicon substrate, and similarly to Test Example 1, UV irradiation and drying by heating under reduced pressure were carried out to make a sample. The contact angle on the surface of the obtained surface of the cured film was evaluated by a fully automatic contact angle meter (DM-500, manufactured by Kyowa Interface Science Co., Ltd.). Similarly, the composition obtained in Comparative Example 1 was spin-coated on a silicon substrate, and UV irradiation and drying by heating under reduced pressure were carried out to make a sample. The static contact angles of these samples and a silicon substrate without coating were measured. Incidentally, the static contact angle is evaluated by both the water contact angle obtained by measuring the contact angle of water drops in the atmosphere and the bubble contact angle obtained by measuring the contact angle of bubbles by placing various substrates upside down in water. The measurement results of the water contact angle in the atmosphere were shown in Table 1, and the measurement results of the bubble contact angle in water were shown in Table 2. It was shown that the water contact angle of the coated surface on the silicon substrate was about 67°. The bubble contact angle was shown to be about 130°. Since the water contact angle of Comparative Example 1 was 72°, and the bubble contact angle thereof was 118°, so that Example 1 was shown to be more hydrophilic.

**[Table 1]**

| Water contact angle | | | | |
|---|---|---|---|---|
| | Samples | No coating (θ) | Example 1 (θ) | Comparative Example 1 (θ) |
| | Silicon substrate | 40.4 ± 1.3 | 67.0 ± 1.4 | 71.9 ± 0.4 |

**[Table 2]**

| Bubble contact angle | | | | |
|---|---|---|---|---|
| | Samples | No coating (θ) | Example 1 (θ) | Comparative Example 1 (θ) |
| | Silicon substrate | 130.9 ± 2.3 | 130.4 ± 2.0 | 117.7 ± 0.3 |

### <Test Example 4>

### [Protein adsorption test]

The protein adsorption experiment was carried out using fibrinogen (0.30 mg/mL). Also, similarly to Test Example 3, the adhesive composition (with an acid catalyst) obtained in Example 1 and the composition obtained in Comparative Example 1 were each spin-coated on a silicon substrate, UV irradiation and drying by heating under reduced pressure were carried out to make samples. In Control Example 1, an uncoated PP substrate was used. The sample was fixed to a special holder, a phosphate buffered saline (PBS) solution in which the protein was dissolved was added into the well of the holder, the sample and the protein solution were brought into contact with each other, and the mixture was allowed to stand at 37°C for 1 hour. Thereafter, it was washed with PBS to remove un-adsorbed protein. The protein adsorbed to the coat surface was all dissolved again using 1% by mass sodium dodecyl sulfate (SDS). A concentration of the dissolved protein was determined by a Micro BCA kit (wavelength 560 nm), and the adsorbed protein concentration was obtained. In Fig. 6, the results of the protein adsorption experiment to the surface of the cured film by coating the adhesive composition (PBetaine/PGrB) of Example 1, the PP substrate (Control Example 1) and the coating film of the composition (PGrB) of Comparative Example 1 are shown. As a result, no adsorbed fibrinogen was detected on the film of the adhesive composition of Example 1. On the other hand, it was shown that 68 µg·cm⁻² of fibrinogen was adsorbed on the PP substrate of Control Example 1, and 20 µg·cm⁻² thereof was adsorbed on the coating film of PGrB of Comparative Example 1. Accordingly, it was shown that a high protein adsorption inhibiting ability was shown on the cured film of the adhesive composition.

**[Table 3]**

| Samples | Fibrinogen adsorbed amount (µg·cm⁻²) |
|---|---|
| Example 1 | Not detected |
| Control Example 1 | 67.7 ± 11.6 |
| Comparative Example 1 | 19.5 ± 16.4 |

### <Test Example 5>

### [Cell adhesion experiment]

The glass substrate coated in Test Example 2 was used in place of the PP substrate and PDMS substrate coated in Test Example 1, and the adhesion experiment of cells was carried out by the experimental method mentioned below. The cured film on the glass substrate prepared in Example 2 was allowed to stand on the bottom of a 24-well cell culture plate. After the cured film was washed with sterile water three times, it was immersed in PBS under room temperature circumstance for 3 hours.

Mouse fibroblasts (NIH3T3) were cultured in Dulbecco's modified Eagle's medium (FCS-containing DMEM) containing 10% fetal calf serum (FCS) under an environment of 5% CO₂ and 37°C. The cultured NIH3T3 cells were washed once with sterile PBS, 1 mL of 0.02% ethylenediaminetetraacetic acid (EDTA) solution and 1 mL of 0.25% trypsin solution were added thereto and the cells were peeled off from the culture plate. The cell suspension was centrifuged to recover the NIH3T3 cells, and then, suspended again with FCS-containing DMEM to obtain a solution of 7 × 10⁴ cells/mL.

The cell suspension was prepared in a medium so as to be 4 × 10⁴ cells/cm² for each well of the cell culture plate on which the cured film was fixed, and seeded on the cured film. After culturing under an environment of 5% CO₂ and 37°C for 12 hours, the cured film was washed three times with PBS, and the cells adhered on the cured film were fixed using a 2% glutaraldehyde PBS solution. After washing three times with ultrapure water, it was dried under reduced pressure with a rotary vacuum pump. The adhered cells were stained with a crystal violet-PBS stain solution having a concentration of 0.1% by mass, and the number of the adhered cells was counted by subjecting to arbitral observation of 5 fields of view using an optical microscope.

In Fig. 7(a), the results (optical microscope image) of the cell adhesion experiment on the surface of the cured film (PBetaine/PGrB) coated with the adhesive composition of Example 1 are shown. Although slight cell adhesion was observed, it was clarified that cell elongation was inhibited. Also, the surface of the coating film of the composition (PGrB) of Comparative Example 1 which contains no PBetaine was remarkably increased in the number of cells adhered and the number of spreads. On the other hand, in the polystyrene plate (TCPS) substrate surface for tissue culture used as a control, the same cell adhesion behavior as the PGrB surface was observed. From the above results, it was shown that the cured film of the adhesive composition of Example 1 has a cell adhesion inhibitory ability.

### <Example 2>

A 3% by mass dimethylsulfoxide solution (250 µL) of PBetaine obtained in Synthetic Example 1 and a 3% by mass dimethylsulfoxide solution (250 µL) of PGrB obtained in Synthetic Example 3 were mixed with a ratio of 1 : 1 V/V%, and further several drops of a 6 mol/L hydrochloric acid aqueous solution (10 µL) were added thereto dropwise and mixed to prepare an adhesive composition (with an acid catalyst).

### <Example 3>

A 3% by mass dimethylsulfoxide solution (250 µL) of PBetaine obtained in Synthetic Example 1 and a 3% by mass dimethylsulfoxide solution (250 µL) of PGrB obtained in Synthetic Example 3 were mixed with a ratio of 1 : 1 V/V%, and further sulfuric acid (2 µL) was mixed to prepare an adhesive composition (with an acid catalyst).

### <Comparative Example 2>

A 3% by mass dimethylsulfoxide solution of PGrB obtained in Synthetic Example 3 was prepared, and further several drops of a 6 mol/L hydrochloric acid aqueous solution were added thereto dropwise and mixed to prepare a composition of Comparative Example 2.

### <Comparative Example 3>

A 3% by mass dimethylsulfoxide solution (500 µL) of PGrB obtained in Synthetic Example 3 was prepared, and further sulfuric acid (2 µL) was mixed therewith to prepare a composition of Comparative Example 3.

Further, the substrates used in the following Test Examples 6 to 11 are as follows.

### (Glass substrate)

Commercially available slide glass for microscopic observation (manufactured by Matsunami Glass Ind., Ltd.) was cut into 1 cm × 1 cm and used.

### (Polyethylene terephthalate (PET) substrate)

PET sheet (manufactured by Toray Industries, Inc.) was cut into 1 cm × 1 cm and used.

### (Polypropylene (PP) substrate)

PP sheet (manufactured by Sekisui Seikei Co., Ltd.) was cut into 1 cm × 1 cm and used.

### <Test Example 6>

### [Cell adhesion experiment]

The adhesive composition (with an acid catalyst) obtained in Example 2 and the adhesive composition obtained in Comparative Example 2 were spin-coated on a glass substrate, and UV irradiation and drying by heating under reduced pressure were carried out to make samples.

The cured film on the glass substrate prepared by the above-mentioned method was allowed to stand on the bottom of a 24-well cell culture plate. After the cured film was washed with sterile water three times, it was immersed in PBS under room temperature circumstance for 3 hours.

Mouse fibroblasts (NIH3T3) were cultured in Dulbecco's modified Eagle's medium (FCS-containing DMEM) containing 10% fetal bovine serum (FBS) under an environment of 5% CO₂ and 37°C. The cultured NIH3T3 cells were washed once with sterile PBS, 1 mL of 0.02% ethylenediaminetetraacetic acid (EDTA) solution and 1 mL of 0.25% trypsin solution were added thereto and the cells were peeled off from the culture plate. The cell suspension was centrifuged to recover the NIH3T3 cells, and then, suspended again with FBS-containing DMEM to obtain a solution of 7 × 10⁴ cells/mL.

The obtained cell suspension was prepared in a medium so as to be 4 × 10⁴ cells/cm² for each well of the cell culture plate on which the cured film was fixed, and seeded on the cured film. After culturing under an environment of 5% CO₂ and 37°C for 24 hours, the cured film was washed three times with PBS, and the cells adhered on the cured film were fixed using a 2% glutaraldehyde PBS solution. After washing three times with ultrapure water, it was dried under reduced pressure with a rotary vacuum pump. The adhered cells were stained with a crystal violet-PBS stain solution having a concentration of 0.1% by mass, and the number of the adhered cells was counted by subjecting to arbitral observation of 5 fields of view using an optical microscope.

In Fig. 8(a), the results (optical microscope image) of the cell adhesion experiment on the surface of the cured film (PBetaine/PGrB) coated with the adhesive composition of Example 2 are shown. Although slight cell adhesion was observed, it was clarified that cell elongation was inhibited.

Also, in Fig. 8(b), the results of the cell adhesion experiment on the surface of the coating film of the composition (PGrB) of Comparative Example 2 containing no PBetaine are shown. On the PGrB film, the number of the adhered cells and the number of spreads were significantly increased. Fig. 8(c) shows the results of the cell adhesion experiment on the surface of the polystyrene plate (TCPS) substrate for tissue culture used as Control Example 2. On the surface of the TCPS substrate, the cell adhesion behavior similar to that of the PGrB surface was observed. Fig. 8(d) shows the number of the adhered cells to the surface of each sample substrate. The average value and the error were obtained from the results of observing 5 points at random on the surface of one sample and totaling three samples.

In the evaluation obtained from the dispersion distribution, it was recognized that the surface of PBetaine/PGrB showed remarkable inhibition of cell adhesion as compared with PGrB and TCPS.

From the above results, it was shown that the cured film of the adhesive composition of Example 2 had a cell adhesion inhibitory ability.

### <Test Example 7>

### [Protein adsorption test using fetal bovine serum (FBS)]

The adhesive compositions obtained in Example 2 and Comparative Example 2 were each spin-coated on a glass substrate, and similarly to Test Example 6, UV irradiation and drying by heating under reduced pressure were carried out to make samples.

The cured film on the substrate was fixed to a self-made holder made of polydimethylsiloxane, and allowed to stand in PBS under an environment of 25°C for 3 hours for stabilization. Thereafter, PBS was drawn out, 0.5 mL of a 10% bovine serum-containing DMEM medium was injected thereto, and the mixture was maintained the temperature in an incubator at 37°C for 1 hour as an adsorption time. Thereafter, it was gently washed with PBS to remove un-adsorbed protein. The protein adsorbed to the coat surface was all dissolved again using 1% by mass sodium dodecyl sulfate (SDS). A concentration of the dissolved protein was determined by a Micro BCA kit (wavelength 560 nm), and the adsorbed protein concentration was obtained.

In Fig. 8(e), the results of the protein adsorption experiment to the surface of the cured film by coating the adhesive composition (PBetaine/PGrB) of Example 2, TCPS (Control Example 2) and the coating film of the composition (PGrB) of Comparative Example 2 are shown. As a result, it was clarified that the total amount of protein adsorbed on the film of the adhesive composition of Example 2 was 16 mg·mm⁻², which was significantly reduced. On the other hand, it was shown that the protein contained in FBS of 84 mg·mm⁻² was adsorbed on the TCPS substrate of Control Example 1, and 59 mg·mm⁻² was adsorbed on the coating film of PGrB of Comparative Example 1. Accordingly, it was shown that a high protein adsorption inhibiting ability was shown on the cured film of the PBetaine/PGrB adhesive composition, even in the medium used for cell culture.

### <Test Example 8>

### [Cytotoxicity test]

The adhesive compositions obtained in Example 2 and Comparative Example 2 were each spin-coated on a glass substrate, and similarly to Test Example 6, UV irradiation and drying by heating under reduced pressure were carried out to make samples.

The sample, which is the cured film on the glass substrate mentioned above, was immersed in a 10% FBS-containing DMEM medium, and maintained the temperature in an incubator at 37°C for an immersion time of 24 hours to prepare an extract.

NIH3T3 cells (2×10³ cells/well) pre-cultured for 24 hours were seeded on a 96-well plate. The medium of each well was drawn out, and 100 µL of the extract obtained as mentioned above was added thereto. Thereafter, the culture was maintained the temperature in an incubator at 37°C for 24 hours. 10 µL of WST-8 reagent (CK04 Cell Counting Kit-8, DOJINDO LABORATORIES) was added to each well, and the mixture was maintained in an incubator at 37°C for further 4 hours. The cell solution colored with the WST-8 reagent was set on a plate reader, and the absorbance in the region of 450 nm was measured. At that time, a sample containing no cell was used as the background.

In Fig. 8(f), the results of the cytotoxicity experiment on the surface of the cured film by coating the adhesive composition (PBetaine/PGrB) of Example 2, TCPS (Control Example 1) and the coating film of the composition (PGrB) of Comparative Example 2 are shown. As a result of subjecting to cell culture using a medium from which the surface of each sample substrate was extracted, the cured film of the adhesive composition of the present invention showed the same number of cells as those of TCPS, so that it was clarified that it did not show cytotoxicity.

### <Test Example 9>

### [Cell adhesion experiment (PP substrate and PET substrate)]

The adhesive composition obtained in Example 2 was spin-coated on PP and PET substrates, and similarly to Test Example 6, UV irradiation and drying by heating under reduced pressure were carried out to make a sample. Using these samples, cell adhesion experiment which is the same as that of Test Example 6 was carried out.

In Figs. 9(a) and (e), the results (optical microscope image) of the cell adhesion experiment on the surface of the cured film (PBetaine/PGrB) formed by coating the adhesive composition of Example 2 and cured on the PP substrate are shown, and in Figs. 9(c) and (g), the results of the cell adhesion experiment on the surface of the cured film (PBetaine/PGrB) formed by curing on the PET substrate are shown. Although slight cell adhesion was observed in these, it was clarified that spreads of the cells was inhibited.

In Figs. 9(b) and (f), the results of the cell adhesion experiment on the PP substrate surface (uncoated) used as Control Example 3 are shown, and in Fig. 9(d) and (h), the results of the cell adhesion experiment on the PET substrate surface (uncoated) used as Control Example 5 are shown. In these, it could be recognized that the number of adhered cells and the number of spreads were significantly increased.

From the above results, it was shown that the cured film of the adhesive composition of Example 2 had a cell adhesion inhibitory ability.

### <Test Example 10>

### [Platelet adhesion test]

The adhesive compositions obtained in Example 3 and Comparative Example 3 were each spin-coated on a glass substrate, and similarly to Test Example 6, UV irradiation and drying by heating under reduced pressure were carried out to make samples. The obtained sample was placed in a sample bottle made of glass and allowed to stand, and then, allowed to stand in PBS under a 25°C environment for 3 hours to carry out stabilization.

Human blood (TENNESSEE BLOOD SERVICES) was dispensed into 15 mL falcon tubes by 10 mL each, and subjected to centrifugal operation under a 25°C environment at 1,500 rpm (200 × g) for 5 minutes to obtain platelet-rich plasma.

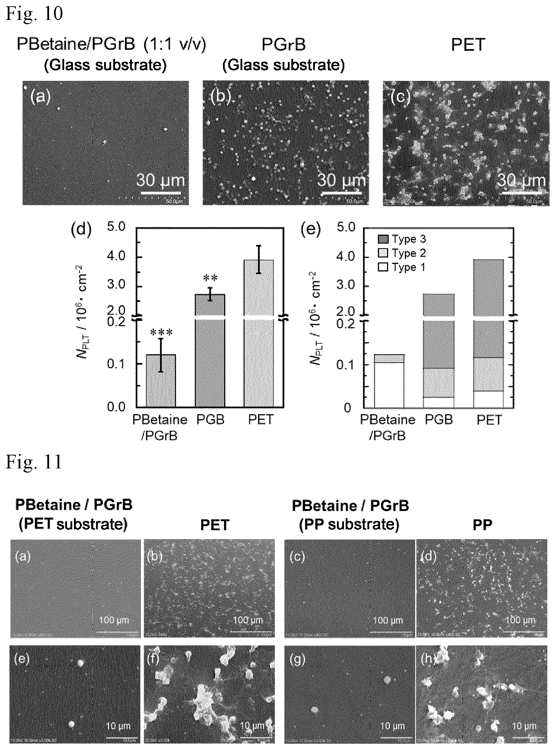

The PBS in which the sample was immersed was drawn out, 1.0 mL of the obtained platelet-rich plasma (1.14×10⁵ cells/µL) was weighed immediately with a pipette, and it was again added to the sample bottle whereby the sample was immersed in the platelet-rich plasma. Thereafter, it was maintained in an incubator at 37°C environment for an immersion time of 1 hour. The sample was washed by gently adding PBS to remove non-adhesive platelets. Further, the sample was washed three times by gently adding PBS, and then, 1.0 mL of a 2.0% glutaraldehyde aqueous solution was added thereto, and the temperature of the mixture was maintained in a refrigerator under a 4°C environment for an immersion time of 2 hours to fix the adhered platelets. Thereafter, it was washed with ultrapure water three times and naturally dried. The dried sample was subjected to platinum sputtering treatment, and surface observation was carried out using an electron microscope (SU3500, HITACHI). Fig. 10(a) shows the results (optical microscope image) of the platelet adhesion experiment on the surface of the cured film (PBetaine/PGrB) formed by coating the adhesive composition of Example 3 and curing. Although a small amount of platelets was observed, it was clarified that the spreads of platelets was inhibited. Also, in Fig. 10(b), the results of the platelet adhesion experiment on the surface of the coating film of the composition (PGrB) of Comparative Example 3 containing no PBetaine. On the PGrB film, the number of adhesion and the number of spreads of the adhered platelets were significantly increased. Fig. 10(c) shows the results of the platelet adhesion experiment on the surface of the PET substrate used as Control Example 4. On the surface of the PET substrate, platelets adhesion behavior which was the same as in the PGrB surface was observed. Fig. 10(d) shows the number of platelets adhered to the sample. It was clarified that the surface of the cured film (PBetaine/PGrB) formed by coating the adhesive composition of Example 3 and curing showed significant inhibition of platelets adhesion. Fig. 10(e) shows the results of dividing the morphology of platelets adhering to the sample surface into three stages. Type 1 shows normal, Type 2 shows pseudopodia formation, and Type 3 shows spreads. The surface of the cured film (PBetaine/PGrB) formed by coating the adhesive composition of Example 3 and curing had slightly adhered platelets, but they were found to be in an inactive state. On the other hand, it was found that the surface of the coating film of the composition (PGrB) of Comparative Example 3 and the surface of the PET substrate were admitted to exist pseudopodia formation and a large number of spread platelets.

### <Test Example 11>

### [Platelets adhesion experiment (PP substrate and PET substrate)]

The adhesive composition obtained in Example 3 was spin-coated on PP and PET substrates, and similarly to Test Example 6, UV irradiation and drying by heating under reduced pressure were carried out to make samples. Using these samples, and using a PET substrate and a PP substrate (uncoated) as Control Example 6 and 7, a platelet adhesion experiment similar to that in Test Example 10 was carried out.

Figs. 11(a) and (e) show the results of the platelet adhesion experiment on the surface of the cured film (PBetaine/PGrB) formed by coating the adhesive composition of Example 3 and curing on a PET substrate, Figs. 11(b) and (f) show the results of the platelet adhesion experiment on the surface of the PET substrate (uncoated) used as Control Example 6, Figs. 11(c) and (g) show the results of the platelet adhesion experiment on the surface of the cured film (PBetaine/PGrB) formed by coating the adhesive composition of Example 3 and curing on a PP substrate, and in Figs. 11(d) and (h) show the results of the platelet adhesion experiment on the surface of the PP substrate (uncoated) used as Control Example 7. Figs. 4(a) to (d) show 400-fold optical microscope observation image, and Figs. 4(e) to (f) show 3,000-fold optical microscope observation image. On the surface formed by coating the adhesive composition of Example 3 on PET and PP substrates, high platelets adhesion inhibition was observed, respectively.

From the above results, it was shown that the cured film of the adhesive composition of Example 3 had a high platelets adhesion inhibition ability. Also, it was shown that the effect is useful on any of the glass, PET and PP substrates.

## Claims

1. An adhesive composition which comprises a copolymer A which contains a recurring unit having a cyclic ether structure and a recurring unit having a benzophenone structure, and a copolymer B which contains a recurring unit having a betaine structure and a recurring unit having a hydroxyl group.

2. The composition according to Claim 1, wherein the adhesive composition is a two-component type comprising a first agent containing the copolymer A which contains a recurring unit having a cyclic ether structure and a recurring unit having a benzophenone structure, and a second agent containing the copolymer B which contains a recurring unit having a betaine structure and a recurring unit having a hydroxyl group.

3. The composition according to Claim 1 or 2, wherein the recurring unit having a cyclic ether structure of the copolymer A is a recurring unit represented by the following formula (a1): 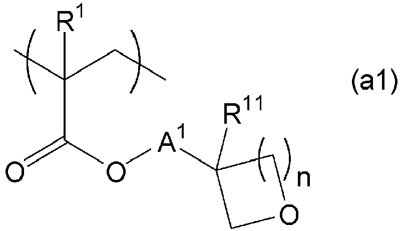
wherein R¹ represents a hydrogen atom or a C₁₋₅ alkyl group, A¹ represents a single bond or a C₁₋₅ alkylene group, R¹¹ represents a hydrogen atom, a C₁₋₅ alkyl group or an aryl group, and n represents 0, 1 or 2, and
the recurring unit having a benzophenone structure is a recurring unit represented by the following formula (a2): 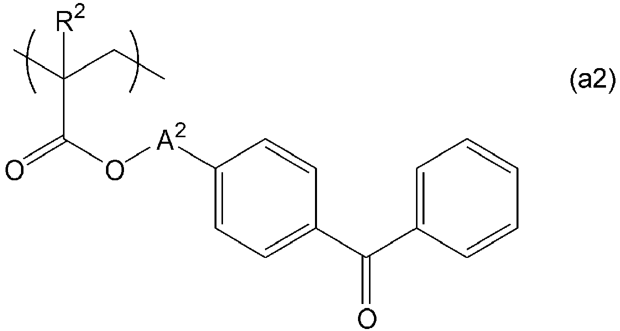
wherein R² represents a hydrogen atom or a C₁₋₅ alkyl group, A² represents a single bond, a C₁₋₅ alkylene group, a C₁₋₅ alkyleneoxy group or -CH(OH)CO-.

4. The composition according to Claim 3, wherein a ratio (molar ratio) of the recurring unit having a cyclic ether structure to the recurring unit having a benzophenone structure in the copolymer A is 10/90 to 90/10.

5. The composition according to Claim 1 or 2, wherein the recurring unit having a betaine structure of the copolymer B is a recurring unit represented by the following formula (b1): 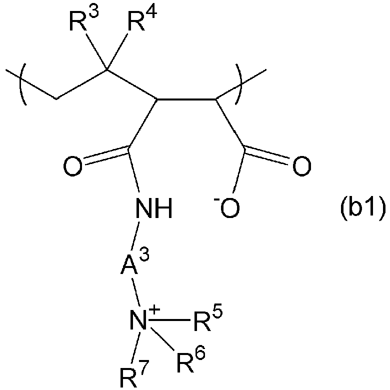
wherein R³ and R⁴ each independently represent a hydrogen atom, a C₁₋₅ alkyl group or a C₁₋₅ alkoxy group, R⁵, R⁶ and R⁷ each independently represent a hydrogen atom or a C₁₋₅ alkyl group, and A³ represents a C₁₋₅ alkylene group, and
the recurring unit having a hydroxyl group is a recurring unit represented by the following formula (b2): 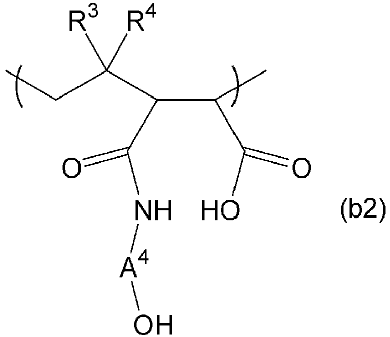
wherein R³ and R⁴ each independently represent a hydrogen atom, a C₁₋₅ alkyl group or a C₁₋₅ alkoxy group, and A⁴ represents a C₁₋₅ alkylene group.

6. The composition according to Claim 5, wherein a ratio (molar ratio) of the recurring unit having a betaine structure to the recurring unit having a hydroxyl group in the copolymer B is 10/90 to 90/10.

7. The adhesive composition according to any one of Claims 1 to 6, which further comprises an acid catalyst.

8. A cured product of an adhesive composition which comprises a copolymer A which contains a recurring unit having a cyclic ether structure and a recurring unit having a benzophenone structure, and a copolymer B which contains a recurring unit having a betaine structure and a recurring unit having a hydroxyl group.

9. The cured product according to Claim 8, which has a function of inhibiting adhesion of biological substances.

10. A method for producing the cured product of the adhesive composition according to Claim 8 or 9, which comprises a step of mixing a copolymer A containing a recurring unit having a cyclic ether structure and a recurring unit having a benzophenone structure, with a copolymer B containing a recurring unit having a betaine structure and a recurring unit having a hydroxyl group; optionally, a step of adding an acid catalyst; a step of coating the obtained mixture to an object; and a step of subjecting to photoirradiation and heat treatment of a coated surface.

11. The producing method according to Claim 10, wherein the acid catalyst is an inorganic acid.
